# EUROPÄISCHE PATENTSCHRIFT

(11) **EP 2 525 933 B1**
(45) Veröffentlichungstag und Bekanntmachung des Hinweises auf die Patenterteilung: **04.03.2015**
(21) Anmeldenummer: 11707061.5
(22) Anmeldetag: 21.01.2011
(51) Int. Cl.: E01B 31/13, B23C 3/00

(54) **VORRICHTUNG ZUM SPANABHEBENDEN NACHBEARBEITEN DER LAUFFLÄCHE EINES SCHIENENKOPFES**
DEVICE FOR REWORKING THE RUNNING SURFACE OF A RAIL HEAD BY MACHINING
DISPOSITIF POUR LA RECTIFICATION AVEC ENLÈVEMENT DE COPEAUX DE LA SURFACE DE ROULEMENT D'UNE TÊTE DE RAIL.

(30) Priorität: 21.01.2010 AT 742010
(43) Veröffentlichungstag der Anmeldung: 28.11.2012
(73) Patentinhaber: Schweerbau GmbH & Co. KG, 31655 Stadthagen (DE); Maschinenfabrik Liezen und Giesserei Ges.m.b.H., 8940 Liezen (AT)
(72) Erfinder: Rungger, Helmut, 4661 Roitham (AT)
(74) Vertreter: Patentanwaltskanzlei Hübscher
(86) Internationale Anmeldenummer: PCT/AT2011/000037
(87) Internationale Veröffentlichungsnummer: WO 2011/088492

(56) Entgegenhaltungen:
- EP-A2- 0 148 089
- WO-A1-95/20071

## Beschreibung

### Technisches Gebiet

Die Erfindung bezieht sich auf eine Vorrichtung zum spanabhebenden Nachbearbeiten der Lauffläche eines Schienenkopfes mit einem entlang des Schienenkopfes geführten Gestell, in dem zwei gegensinnig drehend antreibbare, stirnseitig an die Lauffläche anstellbare Bearbeitungswerkzeuge beidseits des Schienenkopfes gelagert sind.

### Stand der Technik

Aufgrund vergleichsweise hoher Achslasten und hoher Fahrgeschwindigkeiten werden Schienen oft bis zur Fließgrenze des Schienenwerkstoffs beansprucht und unterliegen daher einem Verschleiß, der sich nachteilig auf das Profil der Lauffläche des Schienenkopfes auswirkt, sodass zur Wartung der Schienen die Laufflächen nachbearbeitet werden müssen. Zu diesem Zweck sind Schleifaggregate bekannt (AT 344 772 B), die wenigstens zwei in Längsrichtung des Schienenkopfes hintereinander angeordnete, auf gegenüberliegenden Seiten des Schienenkopfes stirnseitig an die Lauffläche angestellte Topfscheiben mit einem dem Laufflächenprofil entsprechenden Schleifprofil aufweisen. Nachteilig ist bei solchen wie auch bei anderen Schleifaggregaten (WO 2003/042458 A2), dass insbesondere bei höheren Vorschubgeschwindigkeiten mit einer erheblichen Erwärmung des Schienenkopfes gerechnet werden muss, wodurch die mögliche Bearbeitungsgeschwindigkeit beschränkt wird. Zur Erhöhung der Bearbeitungsgeschwindigkeit wurde deshalb vorgeschlagen (DE 32 22 208 A1), Fräswerkzeuge einzusetzen, deren in mehreren axialen Gruppen über den Umfang des Messerkopfes verteilte Schneiden das Schienenkopfprofil nachbilden. Der durch ein solches Umfangfräsen bedingte, in einer oberflächennormalen Längsebene bogenförmige Schnittverlauf der einzelnen Schneiden des Fräswerkzeuges führt allerdings zu einer in Schienenlängsrichtung gewellten Oberfläche des Schienenkopfes, wobei sich die Oberflächenqualität mit zunehmender Vorschubgeschwindigkeit wegen des größer werdenden Abstands der Spanabträge aufeinanderfolgender Schneiden verschlechtert.

Diese Nachteile werden durch Stirnfräser (US 4 583 893 A) vermieden, die auf einer Seite des Schienenkopfes angeordnet sind und mit einer aufwendigen Führung eingesetzt werden, die eine frei drehbar gelagerte Führungsscheibe sowie mehrere Führungsrollen auf der gegenüberliegenden Schienenseite aufweist. Neben dem vergleichsweise großen Konstruktionsaufwand ergibt sich der erhebliche Funktionsnachteil, dass zur Bearbeitung der dem Stirnfräser gegenüberliegenden Seite des Schienenkopfes ein Stirnfräser in einem vergleichsweise großen Abstand in Schienenlängsrichtung eingesetzt werden muss, was unter Umständen ungleichmäßige Bearbeitungen der beiden Seiten des Schienenkopfes mit sich bringt.

Ähnliche Nachteile ergeben sich bei einer anderen bekannten Vorrichtung (EP 0 148 089 A2), bei der die Lauffläche beidseits der Längsmitte durch einen Fräskopf bearbeitet wird, der zwar als Stirnfräser ausgebildet ist, aber mit entsprechend geneigter Achse eingesetzt werden muss, weil diesem gemeinsamen Fräskopf Umfangsfräser für die Längsseiten des Schienenkopfs vor- bzw. nachgeordnet werden müssen.

### Darstellung der Erfindung

Der Erfindung liegt somit die Aufgabe zugrunde, eine Vorrichtung der eingangs geschilderten Art zum spanabhebenden Nachbearbeiten der Lauffläche eines Schienenkopfes so auszugestalten, dass eine vorteilhafte Laufflächenbearbeitung mit einer vergleichsweise hohen Bearbeitungsgeschwindigkeit gewährleistet werden kann, ohne eine übermäßige Wärmebelastung des Schienenkopfes in Kauf nehmen zu müssen.

Die Erfindung löst die gestellte Aufgabe dadurch, dass die Bearbeitungswerkzeuge als Stirnfräser ausgebildet sind, deren Drehachsen in einer gemeinsamen Ebene verlaufen und deren Schneidbereiche einander quer zur Längsrichtung des Schienenkopfes überlappen, und dass die beiden Stirnfräser über ein Verteilergetriebe an einem gemeinsamen Drehantrieb angeschlossen sind.

Durch die Anordnung der Drehachsen der in einem gemeinsamen Gestell gelagerten Stirnfräser in einer gemeinsamen Ebene werden die konstruktiven Vorgaben geschaffen, diese Stirnfräser über ein Verteilergetriebe an einen gemeinsamen Drehantrieb anzuschließen, was nicht nur den Konstruktionsaufwand herabsetzt, sondern auch die Möglichkeit schafft, die beiden Stirnfräser über das gemeinsame Gestell entlang der zu bearbeitenden Schiene so zu führen, dass eine gleichmäßige Bearbeitung der beiden Schienenkopfseiten durch die einander bezüglich des Schienenkopfes gegenüberliegenden Stirnfräser ermöglicht wird. Voraussetzung hiefür ist, dass die beiden Stirnfräser höchstens einen begrenzten gegenseitigen Abstand voneinander in Längsrichtung des Schienenkopfes haben, der von den beiden miteinander kämmenden Zahnrädern des Verteilergetriebes zum Antrieb der Wellen der Stirnfräser bestimmt wird. Die Drehachsen der beiden Stirnfräser müssen nicht zwingend parallel zueinander verlaufen. Mit einer entsprechend geneigten Anstellung der Stirnfräser kann ein größerer Abtrag der Laufflächen ermöglicht werden.

Die günstigsten Bearbeitungsbedingungen ergeben sich, wenn die beiden Stirnfräser im Wesentlichen keine gegenseitige Versetzung in Längsrichtung des Schienenkopfes aufweisen. Dies kann dadurch erreicht werden, dass die Stirnfräser über den Umfang verteilte, mit Fräsmessern bestückte, radiale Ansätze aufweisen, die mit radialem Abstand in die Lücken zwischen den auf Lücke versetzten Ansätzen des jeweils gegenüberliegenden Stirnfräsers eingreifen. In diesem Fall können die Drehachsen der beiden Stirnfräser auch in einer gemeinsamen, zur Längsrichtung des Schienenkopfes senkrechten Ebene liegen. Durch diese Maßnahmen kann durch die einander überlappenden Stirnfräser eine genaue, nicht durch einen Werkzeugabstand in Längsrichtung des Schienenkopfes beeinträchtigte Laufflächenbearbeitung durch die entlang des Schienenkopfes geführten Stirnfräser sichergestellt werden. Der überlappende Schneidbereich der einander bezüglich des Schienenkopfes gegenüberliegenden Stirnfräser wird durch die über den Umfang verteilten, mit Fräsmessern bestückten, radialen Ansätzen erreicht, die gegenüber den radialen Ansätzen des gegenüberliegenden Stirnfräsers auf Lücke versetzt sind, sodass bei einem synchronen, gegensinnigen Antreiben der Stirnfräser die Fräsmesser der radialen Ansätze des einen Stirnfräsers in die sich zwischen den Ansätzen des gegenüberliegenden Stirnfräsers ergebenden Lücken eingreifen.

Um eine dem Sollprofil der Lauffläche entsprechende Fräsbearbeitung des Schienenkopfes zu erreichen, können die Fräsmesser der Stirnfräser dem Querschnittsverlauf der Lauffläche angepasste Profilschneiden aufweisen. Eine solche genau dem Sollverlauf entsprechende Nachbearbeitung der Lauffläche ist aber im Allgemeinen nicht erforderlich. In diesem Fall können die Stirnfräser wenigstens zwei gegeneinander radial versetzte Kränze von Fräsmessern mit geraden Schneiden aufweisen, die den Querschnittsverlauf der Lauffläche in Form eines Polygonzuges nachbilden, wobei durch die Anzahl der Fräsmesserkränze auf die maximale Abweichung vom Sollprofil Einfluss genommen werden kann.

### Kurze Beschreibung der Zeichnung

In der Zeichnung ist der Erfindungsgegenstand beispielsweise dargestellt. Es zeigen
- Fig. 1: eine an einem Schienenfahrzeug vorgesehene erfindungsgemäße Vorrichtung zum spanabhebenden Nachbearbeiten der Lauffläche eines Schienenkopfes in einer schematischen Seitenansicht,
- Fig. 2: das entlang des Schienenkopfes geführte Gestell mit den beiden Bearbeitungswerkzeugen in einem schematischen, zur Längsrichtung des Schienenkopfes senkrechten Schnitt in einem größeren Maßstab,
- Fig. 3: die beiden Stirnfräser der erfindungsgemäßen Vorrichtung ausschnittsweise in einer Untersicht in einem größeren Maßstab,
- Fig. 4: eine der Fig. 3 entsprechende Darstellung einer Ausführungsvariante der Stirnfräser,
- Fig. 5: einen Schnitt durch einen Stirnfräser entsprechend der Linie V-V der Fig. 4 in einem größeren Maßstab,
- Fig. 6: eine Unteransicht des Gestells mit den beiden Stirnfräsern einer weiteren Konstruktionsvariante einer erfindungsgemäßen Vorrichtung,
- Fig. 7: einen Schnitt nach der Linie VII-VII der Fig. 6 und
- Fig. 8: eine der Fig. 6 entsprechende Darstellung einer zusätzlichen Konstruktionsvariante.

### Weg zur Ausführung der Erfindung

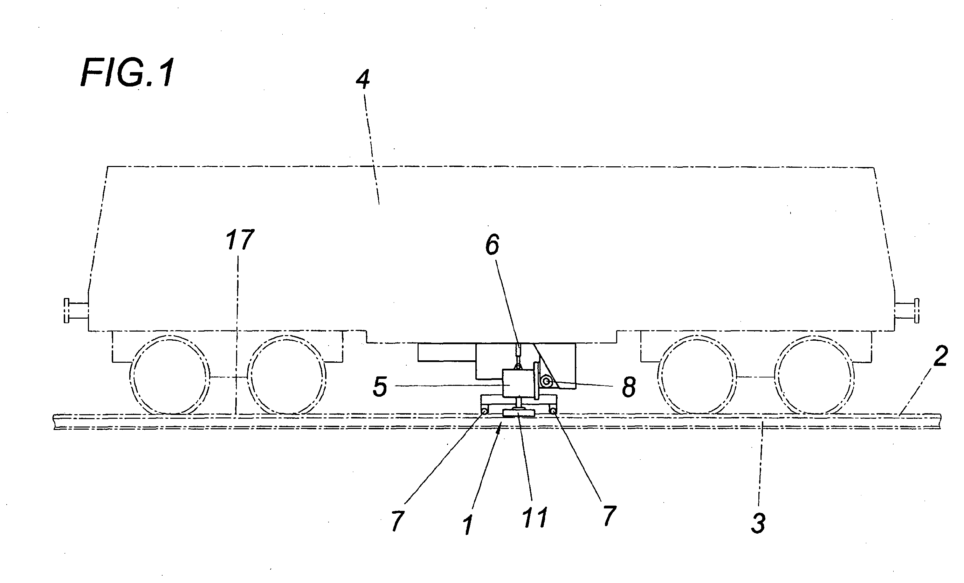

Wie der Fig. 1 entnommen werden kann, ist die erfindungsgemäße Vorrichtung 1 zum spanabhebenden Nachbearbeiten des Schienenkopfes 2 der Schienen 3 einer Gleisanlage an einem Schienenfahrzeug 4 angeordnet, mit dessen Hilfe die Vorrichtung 1 entlang der Schiene 3 verfahren wird. Die Vorrichtung 1 weist ein am Schienenfahrzeug 4 gelagertes Gestell 5 auf, das mit Hilfe eines Hubtriebs 6 der Höhe nach verstellbar am Schienenfahrzeug 4 gelagert ist und sich über Führungsrollen 7 am Schienenkopf 2 abstützt. Diese Führungsrollen 7 führen das Gestell 5 gegenüber der Schiene 3 nicht nur der Höhe, sondern auch der Seite nach.

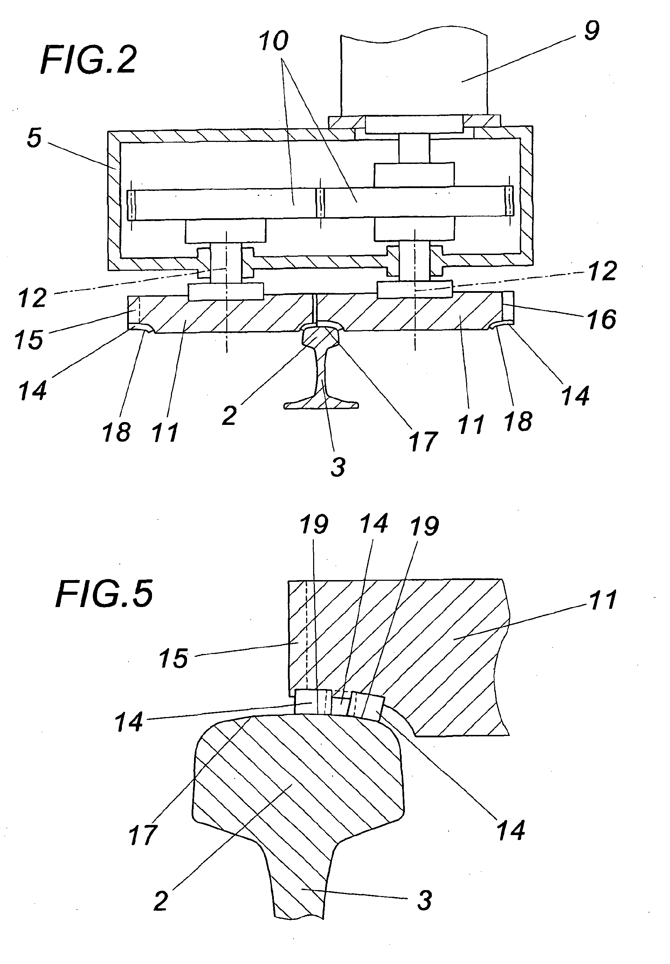

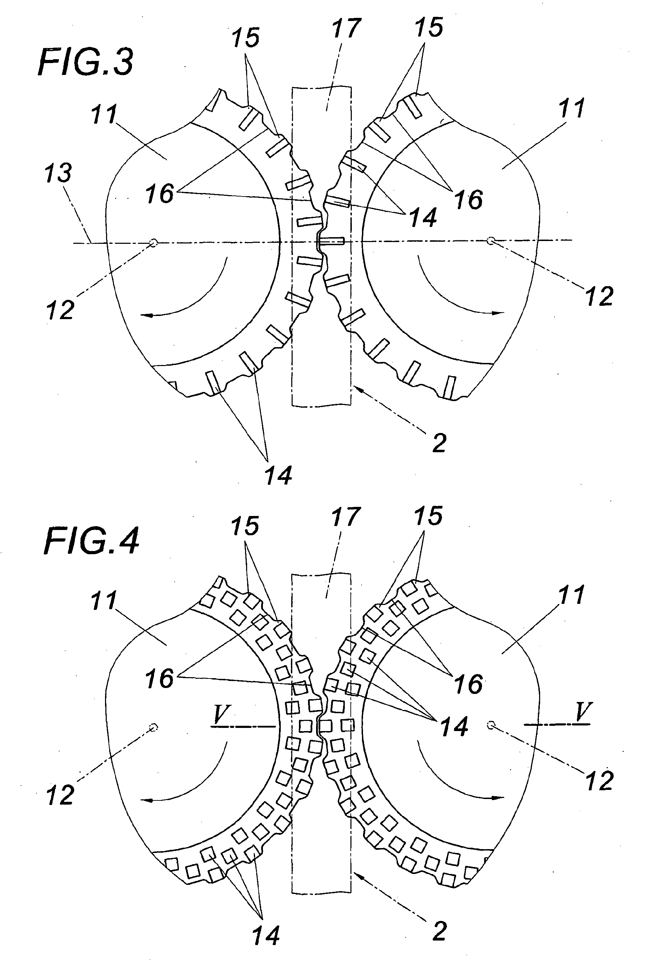

Das Gestell 5, das zur Höhenverlagerung am Schienenfahrzeug 4 über eine Achse 8 angelenkt ist, was jedoch nicht zwingend ist, nimmt gemäß der Fig. 2 ein an einem Drehantrieb 9 angeschlossenes Verteilergetriebe 10 für zwei gegensinnig synchron antreibbare Bearbeitungswerkzeuge in Form von Stirnfräsern 11 auf. Die Drehachsen 12 dieser Stirnfräser 11 liegen in einer gemeinsamen, zur Längsrichtung des Schienenkopfes 2 senkrechten Ebene 13, wie dies in der Fig. 3 eingezeichnet ist. Die Anordnung ist dabei so getroffen, dass sich die Schneidbereiche der beiden bezüglich des Schienenkopfes 2 gegenüberliegenden Stirnfräser 11 überlappen. Dies wird dadurch möglich, dass die Stirnfräser 11 über den Umfang verteilte, mit Fräsmessern 14 versehene radiale Ansätze 15 aufweisen, wobei die Ansätze 15 des einen Stirnfräsers 11 gegenüber den Ansätzen 15 des gegenüberliegenden Stirnfräsers 11 auf Lücke versetzt sind, sodass bei einem gegensinnigen Antrieb der beiden Stirnfräser 11 die radialen Ansätze 15 jeweils in die sich zwischen diesen Ansätzen 15 ergebenden Lücken 16 des jeweils anderen Stirnfräsers 11 eingreifen, und zwar mit radialem Abstand, um Reibungen und dadurch bedingte Verschleißerscheinungen zu vermeiden.

Wie aus der Fig. 2 ersichtlich ist, können die Fräsmesser 14 an den Querschnittsverlauf der Lauffläche 17 des Schienenkopfes 2 angepasste Profilschneiden 18 aufweisen, sodass die Lauffläche 17 entsprechend dem durch die Profilschneide 19 der Fräsmesser 14 vorgegebenen Sollprofil nachgearbeitet wird. Eine solch genaue Nachbearbeitung ist jedoch im Allgemeinen nicht erforderlich. Es kann daher das Laufflächenprofil vom Sollprofil innerhalb eines vorgegebenen Toleranzbereiches abweichen. Dies ermöglicht einfachere Konstruktionsverhältnisse mit Stirnfräsern 11, die gegeneinander radial versetzte Kränze von Fräsmessern 14 mit geraden Schneiden 19 aufweisen, wie dies in den Fig. 4 und 5 angedeutet ist. Über diese geraden Schneiden 19 der Fräsmesser 14 kann das Sollprofil der Lauffläche 17 in Form eines Polygonzuges nachgebildet werden, wobei mit der Anzahl der Fräsmesserkränze die Anpassung an das Sollprofil der Lauffläche 17 verfeinert werden kann. Die Nachbearbeitung des Schienenkopfes 2 im Bereich des Spurradius kann - falls erforderlich - durch Fräsmesser mit entsprechenden Profilschneiden vorgenommen werden.

Besonders vorteilhafte Arbeitsbedingungen ergeben sich, wenn am Schienenfahrzeug 4 für beide Schienen 3 der Gleisanlage zumindest zwei Vorrichtungen 1 in Schienenlängsrichtung hintereinander angeordnet werden, um eine ununterbrochene Nachbearbeitung der Laufflächen 17 der Schienen 3 zu gewährleisten, wenn eine Vorrichtung 1 beispielsweise zu Wartungsarbeiten außer Betrieb gesetzt werden muss.

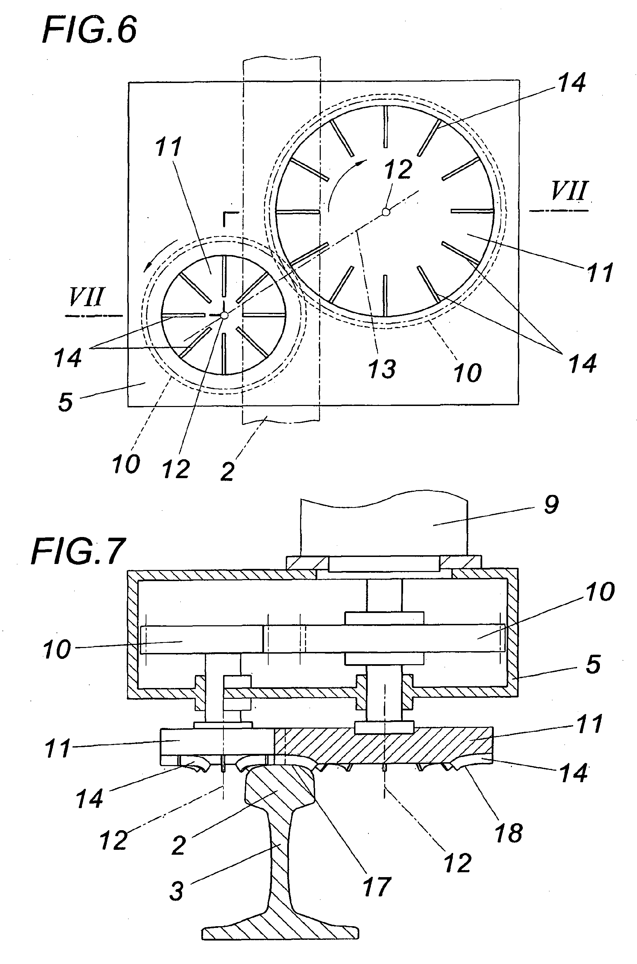

Wird der für einen Stirnfräser 11 zur Verfügung stehende Freiraum beispielsweise durch eine auf der Kurveninnenseite einer Schiene 3 angeordnete Sicherheitsschiene begrenzt, so muss zur Laufflächenbearbeitung des Schienenkopfs zumindest auf der Kurveninnenseite ein Stirnfräser 11 mit einem entsprechend kleinen Durchmesser eingesetzt werden, was Schwierigkeiten hinsichtlich der Lagerung der Stirnfräser 11 im Gestell 5 mit sich bringt. Um hier Abhilfe zu schaffen, können gemäß den Fig. 6 und 7 die beiden Stirnfräser 11 bezüglich der Längsrichtung des Schienenkopfes 3 gegeneinander versetzt im Gestell 5 gelagert werden, sodass sich der Abstand zwischen den Drehachsen 12 der beiden Stirnfräser 11 vergrößert und dadurch Platz für eine entsprechende Lagerung der Stirnfräser 11 geschaffen wird. Die Überlappung der beiden Stirnfräser 11 quer zur Längsrichtung des Schienenkopfs 2 bleibt bestehen. Ein zahnartiges Ineinandergreifen der Fräsmesser 14 ist jedoch nicht immer erforderlich, sodass in diesen Fällen auch die sonst erforderlichen Ansätze 15 der Stirnfräser 11 entfallen können. Wegen des vergleichsweise nur geringen gegenseitigen Versatzes der Schneidbereiche der beiden Stirnfräser 11 in Längsrichtung des Schienenkopfes 2 können die unter Umständen durch diesen Versatz auftretenden Bearbeitungsfehler vernachlässigt werden. Die Führung beider Stirnfräser 11 erfolgt ja gemeinsam über das Gestell 5 in der im Zusammenhang mit der Fig. 1 beschriebenen Art.

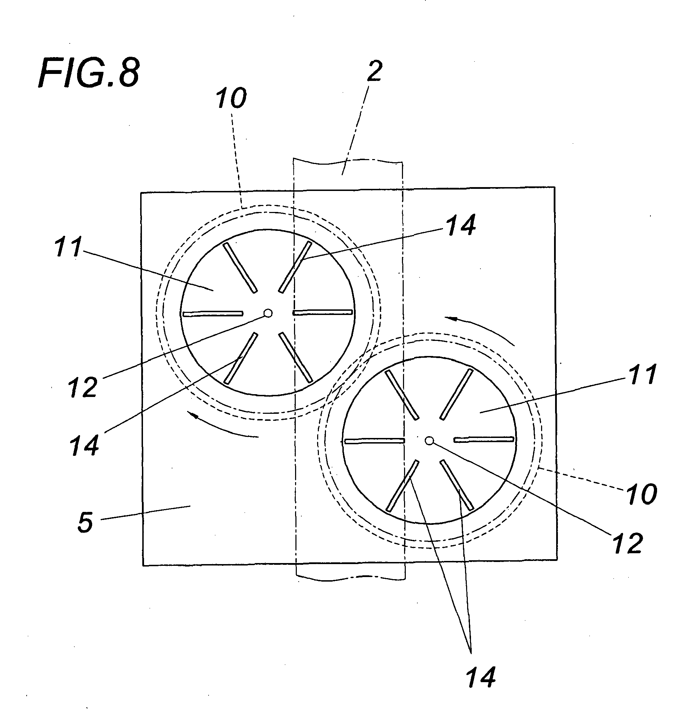

Wie die Fig. 8 erkennen lässt, ist es mit einem gegenseitigen Versatz der beiden Stirnfräser 11 in Längsrichtung des Schienenkopfs 2 auch möglich, die Stirnfräser 11 auf beiden Seiten des Schienenkopfs 2 mit einem kleinen Durchmesser auszustatten, was beispielsweise dann erforderlich wird, wenn beidseits des Schienenkopfes 2 der Freiraum zum Einsatz der Stirnfräser 11 beschränkt ist.

## Patentansprüche

1. Vorrichtung (1) zum spanabhebenden Nachbearbeiten der Lauffläche (17) eines Schienenkopfes (2) mit einem entlang des Schienenkopfes (2) geführten Gestell (5), in dem zwei gegensinnig drehend antreibbare, stirnseitig an die Lauffläche (17) anstellbare Bearbeitungswerkzeuge beidseits des Schienenkopfes (2) gelagert sind, **dadurch gekennzeichnet, dass** die Bearbeitungswerkzeuge als Stirnfräser (11) ausgebildet sind, deren Drehachsen (12) in einer gemeinsamen Ebene (13) verlaufen und deren Schneidbereiche einander quer zur Längsrichtung des Schienenkopfes (2) überlappen, und dass die beiden Stirnfräser (11) über ein Verteilergetriebe (10) an einem gemeinsamen Drehantrieb (9) angeschlossen sind.

2. Vorrichtung (1) nach Anspruch 1, **dadurch gekennzeichnet, dass** die Stirnfräser (11) über den Umfang verteilte, mit Fräsmessern (14) bestückte, radiale Ansätze (15) aufweisen, die mit radialem Abstand in die Lücken (16) zwischen den auf Lücke versetzten Ansätzen (15) des jeweils gegenüberliegenden Stirnfräsers (11) eingreifen.

3. Vorrichtung (1) nach Anspruch 2, **dadurch gekennzeichnet, dass** die Ebene (13) der Drehachsen (12) der Stirnfräser (11) senkrecht zur Längsrichtung des Schienenkopfes (2) verläuft.

4. Vorrichtung (1) nach einem der Ansprüche 1 bis 3, **dadurch gekennzeichnet, dass** die Fräsmesser (14) der Stirnfräser (11) dem Querschnittsverlauf der Lauffläche (17) angepasste Profilschneiden (18) aufweisen.

5. Vorrichtung (1) nach einem der Ansprüche 1 bis 3, **dadurch gekennzeichnet, dass** die Stirnfräser (11) wenigstens zwei gegeneinander radial versetzte Kränze von Fräsmessern (14) mit geraden Schneiden (19) aufweisen, die den Querschnittsverlauf der Lauffläche (17) in Form eines Polygonzuges nachbilden.

## Claims

1. Device (1) for reworking the running surface (17) of a rail head (2) by machining, having a frame (5) guided along the rail head (2), in which two processing tools, which can be driven to rotate in opposite directions and can engage the running surface (17) with their end faces, are mounted on both sides of the rail head (2), **characterised in that** the processing tools are designed as face cutters (11), the rotational axes (12) of which extend in a common plane (13) and the cutting areas of which overlap one another transversely with respect to the longitudinal direction of the rail head (2), and that the two face cutters (11) are attached via a distributor gear (10) to a common rotational drive (9).

2. Device (1) as claimed in claim 1, **characterised in that** the face cutters (11) have radial shoulders (15), which are distributed around the circumference, are fitted with milling cutters (14) and engage with radial spacing in the gaps (16) between the shoulders (15) of the respective opposing face cutter (11) which are offset in a staggered manner.

3. Device (1) as claimed in claim 2, **characterised in that** the plane (13) of the rotational axes (12) of the face cutters (11) extends perpendicular to the longitudinal direction of the rail head (2).

4. Device (1) as claimed in any one of claims 1 to 3, **characterised in that** the milling cutters (14) of the face cutters (11) have profile blades (18) adapted to the cross-sectional shape of the running surface (17).

5. Device (1) as claimed in any one of claims 1 to 3, **characterised in that** the face cutters (11) have at least two mutually radially offset crowns of milling cutters (14) having straight blades (19) which emulate the cross-sectional shape of the running surface (17) in the form of a traverse.

## Revendications

1. Dispositif (1) pour la rectification avec enlèvement de copeaux de la surface de roulement (17) d'une tête de rail (2) comportant un bâti (5) guidé le long de la tête de rail (2) dans lequel deux outils d'usinage pouvant être entraînés en rotation dans le sens contraire et pouvant être placés côté avant sur la surface de roulement (17) sont montés des deux côtés de la tête de rail (2), **caractérisé en ce que** les outils d'usinage sont conçus en tant que fraise en bout (11) dont les axes de rotation (12) sont agencés dans un plan (13) commun et dont les zones de coupe se chevauchent transversalement au sens longitudinal de la tête de rail (2) et **en ce que** les deux fraises en bout (11) sont raccordées par une boîte de transfert (10) à un entraînement de rotation (9) commun.

2. Dispositif (1) selon la revendication 1, **caractérisé en ce que** les fraises en bout (11) présentent des parties saillantes (15) radiales, équipées de couteaux de fraisage (14), réparties sur le pourtour, qui sont en prise avec un espacement radial, dans les espaces (16) entre des parties saillantes (15), s'engrenant dans l'espace, de la fraise en bout (11) respectivement opposée.

3. Dispositif (1) selon la revendication 2, **caractérisé en ce que** le plan (13) des axes de rotation (12) des fraises en bout (11) est perpendiculaire au sens longitudinal de la tête de rail (2).

4. Dispositif (1) selon l'une des revendications 1 à 3, **caractérisé en ce que** les couteaux de fraisage (14) des fraises en bout (11) présentent des coupes de profil (18) adaptées au tracé transversal de la surface de roulement (17).

5. Dispositif (1) selon l'une des revendications 1 à 3, **caractérisé en ce que** les fraises en bout (11) présentent au moins deux couronnes, décalées radialement l'une par rapport à l'autre, de couteaux de fraisage (14) avec des coupes (19) droites qui reproduisent le tracé transversal de la surface de roulement (17) sous forme d'un tracé polygonal.
